# EUROPÄISCHE PATENTSCHRIFT

(11) **EP 2 461 080 B1**
(45) Veröffentlichungstag und Bekanntmachung des Hinweises auf die Patenterteilung: **10.08.2016**
(21) Anmeldenummer: 11008744.2
(22) Anmeldetag: 03.11.2011
(51) Int. Cl.: F16L 55/179

(54) **Packer zum Auskleiden des Übergangsbereiches zwischen einem Wasserhauptrohr und einem in das Hauptrohr einmündenden Hausanschlussrohr**
Packer for cladding the transition between a water mains pipe and a domestic connection pipe that flows into the mains pipe
Manchon destiné à l'habillage de la zone de passage entre une conduite d'eau principale et un branchement individuel se jetant dans la conduite principale

(30) Priorität: 01.12.2010 DE 102010053113
(43) Veröffentlichungstag der Anmeldung: 06.06.2012
(73) Patentinhaber: Schwalm, Martin, 36251 Bad Hersfeld/ Asbach (DE)
(72) Erfinder: Schwalm, Martin, 36251 Bad Hersfeld/ Asbach (DE)
(74) Vertreter: Walther, Walther & Hinz GbR

(56) Entgegenhaltungen:
- EP-A1- 0 063 919
- DE-U1- 9 105 888
- US-A- 5 609 439

## Beschreibung

Die Erfindung betrifft einen Packer zum Auskleiden des Übergangsbereiches zwischen einem Abwasserhauptrohr und einem in das Hauptrohr einmündenden Anschlussrohr, umfassend mindestens ein Tragrohr.

Aus der DE 42 07 038 C2 ist ein Packer der eingangs genannten Art bekannt, umfassend ein Tragrohr mit einem auf dem Umfang des Tragrohres angeordneten aus elastischem Material ausgebildeten Mantel, wobei der Mantel einen in etwa zylindrischen aus elastischem Material ausgebildeten Aufsatz für das Hausanschlussrohr aufweist.

Ein solcher Packer dient nicht nur dem Auskleiden des Hausanschlussrohres, sondern auch des im Bereich des Hausanschlussrohres liegenden Abwasserhauptrohres. Das heißt, dass sowohl der Innenwandbereich des Abwasserhauptrohres als auch der Innenwandbereich des Hausanschlussrohres durch den Packer durch ein geeignetes Material, beispielsweise durch ein in Kunstharz getränktes Vlies abgedeckt und damit saniert werden kann. Das Tragrohr weist eine Öffnung auf, dessen Durchmesser in etwa dem des Hausanschlussrohres entspricht. In diese Öffnung ragt nach innen ein mit einem Boden versehener Zylinder aus elastischem Material, z. B. einem Elastomer, hinein. Wird nun der durch das Tragrohr gebildete Hohlraum mit einem Druckmedium, z. B. Luft, beaufschlagt, dann stülpt sich der Zylinder aus Gummi nach außen bis in das Hausanschlussrohr, wobei gleichzeitig der auf dem Tragrohr angeordnete Mantel aus elastisch nachgiebigem Material sich an die Innenwandung des Abwasserhauptrohres anlegt. Ist nun sowohl dieser Mantel aus elastisch nachgiebigem Material auf seinem äußeren Umfang mit einem beispielsweise kunstharzgetränkten Vlies versehen, als auch der Zylinder auf seiner Oberfläche mit einem entsprechenden Vlies ausgestattet, dann wird in dem Moment, wo die Kammer des Tragrohres mit beispielsweise Druckluft beaufschlagt wird, sich dieses Vlies gleichmäßig sowohl an die Innenwandung des Abwasserhauptrohres als auch an die Innenwandung des Hausanschlussrohres anlegen, und somit den Übergangsbereich des Haüsanschlussrohres zum Hauptwasseranschtussrohr vollständig auskleiden.

Aus der DE 101 24 507 C2 ist ein ähnlicher Packer bekannt, wobei sich dieser Packer von dem Packer gemäß der DE 42 07 038 C2 hauptsächlich dadurch unterscheidet, dass während des Vorganges des Auskleidens des Abwasserhauptrohres und des Hausanschlussrohres der Kanal durchlässig bleibt, was im Wesentlichen dadurch bewerkstelligt wird, dass der Packer zu beiden Enden nicht vollständig geschlossen ist, sondern vielmehr als doppelwandiges Rohr ausgebildet ist, wobei in dem zylindrischen Hohlraum des doppelwandigen Rohres zwei Leitungen geführt sind, um den außen auf dem Mantel aufliegenden zylindrischen Aufsatz zum Auskleiden des Hausanschlussrohres mit einem Druckmedium, z. B. Luft, zu versorgen, und darüber hinaus den Mantel aus elastischem Material zur Anlage an der Innenseite des Hauptrohres durch Zufuhr von z. B. Luft gegen die Innenwandung des Abwasserhauptrohres zu pressen.

Ein weiterer gattungsgemäßen Packer ist aus Document DE 91 05 888 U bekannt.

Abwasserhauptrohre gibt es in den unterschiedlichsten Durchmessern. Der Durchmesser des Abwasserhauptrohres reicht von etwa 200 mm bis zu 600 mm und mehr. Wie bereits an anderer Stelle erläutert, wird der auf dem Tragrohr aufliegende Mantel aus elastisch nachgiebigem Material auf seiner Innenseite z. B. mit Druckluft beaufschlagt, um dafür zu sorgen, dass der Mantel an der Innenwandung des Abwasserhauptrohres anliegen kann. Da der Mantel nur eine gewisse Dehnfähigkeit hat, müssen für die unterschiedlichen Rohrdurchmesser des Abwasserhauptrohres entsprechend unterschiedlich große Packer bereitgehalten werden. Da solche Packer üblicherweise auf einer Selbstfahrlafette angeordnet sind, ist das Vorhalten von Packern unterschiedlicher Durchmesser verhältnismäßig teuer.

Die der Erfindung zugrunde liegende Aufgabe besteht demzufolge darin, ein Packer bereitzustellen, der sowohl in Rohren mit kleinem Durchmesser als auch mit größerem Durchmesser eingesetzt werden kann.

Zur Lösung der Aufgabe wird bei einem Packer zum Auskleiden des Übergangsbereiches zwischen einem Abwasserhauptrohr und einem in das Hauptrohr einmündenden Anschlussrohr mit einem Tragrohr vorgeschlagen, das das Tragrohr auf dem Umfang mindestens zwei aus elastischem Material hergestellte Mäntel aufweist, die übereinander angeordnet sind, wobei die beiden Mäntel endseitig umlaufend miteinander druckdicht verbunden sind, wobei der äußere Mantel einen aus elastischem Material ausgebildeten zylinderförmigen Aufsatz aufweist, wobei der Raum zwischen den beiden Mänteln ebenso mit einem Druckmedium, z. B. Luft, beaufschlagbar ist, wie der Aufsatz auf dem äußeren Mantel. Hierdurch wird Folgendes erreicht:

Nach dem Stand der Technik ist es so, dass auf dem Tragrohr ein einziger Mantel aus elastisch nachgiebigem Material, z. B. einem Gummimaterial, aufliegt, der auf seiner Innenseite mit Luft beaufschlagt wird. Die Dehnfähigkeit eines solchen Mantels ist begrenzt, insbesondere auch deshalb, weil der Mantel endseitig mit dem Tragrohr verbunden ist. Durch die Verwendung von mindestens zwei auf dem Tragrohr angeordneten Mänteln aus elastisch nachgiebigem Material wird nunmehr eine erheblich höhere Dehnfähigkeit erreicht, mit der Folge, dass Abwasserhauptrohre mit unterschiedlichen Durchmessern durch Verwendung eines einzigen Packers mit beispielsweise einem aus Kunstharz getränkten Vlies ausgekleidet werden können.

Vorteilhafte Merkmale und Ausgestaltung der Erfindung ergeben sich aus den Unteransprüchen.

So ist insbesondere vorgesehen, dass die beiden Mäntel endseitig umlaufend miteinander unter Bildung einer druckdichten Kammer verbunden sind. Wird der Raum zwischen den beiden Mänteln mit Druck beaufschlagt, dann werden sich beide Mäntel von dem Tragrohr abheben, was unmittelbar zu einer Durchmessererhöhung führt, die geeignet ist, mit einem solchen Packer nicht nur Rohre relativ gesehen kleinen Durchmessers zu bearbeiten, sondern auch eines erheblich größeren Durchmessers, was mit dem Packer aus dem Stand der Technik aufgrund der Verwendung lediglich eines Mantels auf dem Tragrohr nicht möglich war.

Im Einzelnen ist des Weiteren vorgesehen, dass der Aufsatz zum Auskleiden des Hausanschlussrohres etwa hutförmig ausgebildet ist, wobei der zylindrische Aufsatz im drucklosen Zustand schlaff auf dem Umfang des äußeren Mantels des Packers aufliegt. Erst dann, wenn der Packer seine Position unterhalb des Hausanschlussrohres erreicht hat, wird bei Druckbeaufschlagung der Aufsatz in das Hausanschlussrohr hineinragen, sich dort ebenso aufblähen wie der innere bzw. auch der äußere Mantel auf dem Packer, und somit die auf dem Aufsatz und auch auf dem äußeren Mantel aufliegende Schicht aus Kunstharz getränktem Glasfaservlies fest an den Übergangsbereich vom Hausanschlussrohr zum Abwasserhauptrohr anlegen.

Das Tragrohr weist im Bereich des Aufsatzes eine Öffnung auf, wobei der innere Mantel eine in die Öffnung ragende Ausstülpung besitzt. Bei Beaufschlagung des Zwischenraumes zwischen den beiden Mänteln dient diese Ausstülpung auf die Innenseite des Tragrohres quasi als Anker, da sich die Ausstülpung ebenfalls unter Beaufschlagung eines Druckmediums ausdehnt, und schlussendlich dafür sorgt, dass der innere Mantel im Bereich der Öffnung am Tragrohr anliegt. In die Ausstülpung ragt ein Schlauch oder ein Rohr hinein, wobei durch den Schlauch oder durch das Rohr das Druckmedium geführt ist, das den Innenraum zwischen den beiden Mänteln beaufschlagt. Allerdings ragt durch die Ausstülpung hindurch ein Schlauch oder ein Rohr bis in den Aufsatz hinein, um gleichfalls den Aufsatz aufzublasen. Der in den Aufsatz hineinragende Schlauch oder das Rohr liegen mäanderförmig in der Ausstülpung ein, um zu gewährleisten, dass im ausgedehnten Zustand der Schlauch oder das Rohr genug Länge vorhält.

Eine andere Ausführungsform zeichnet sich dadurch aus, dass der Aufsatz einen Boden aufweist, der zentrisch luftdicht mit dem äußeren Mantel verbunden, z. B. verklebt ist, wobei darüber hinaus der Boden umlaufend mit dem Aufsatz luftdicht verbunden, z. B. verklebt ist. Hierdurch wird erreicht, dass sich der Aufsatz noch besser an den Übergang zum Hausanschlussrohr anpassen kann.

Anhand der Zeichnungen wird die Erfindung nachstehend beispielhaft näher erläutert:

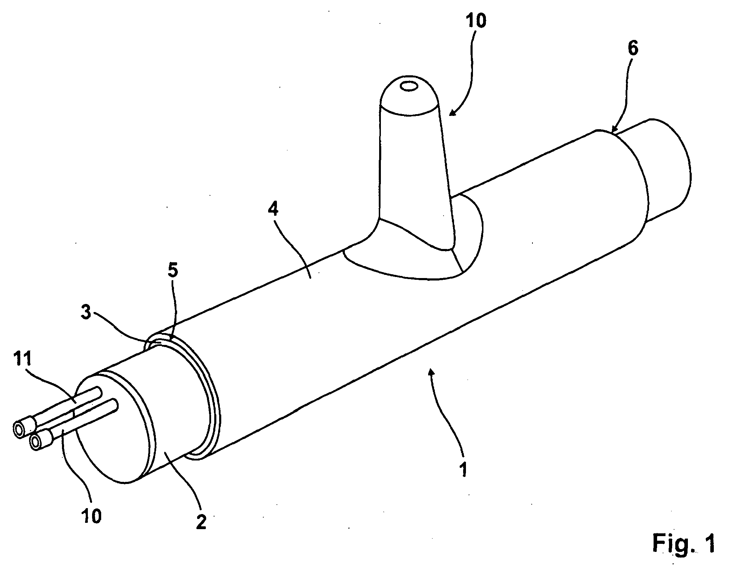

Fig. 1 zeigt den erfindungsgemäßen Packer in einer perspektivischen Ansicht, wobei der Aufsatz aufgestellt ist;
Fig. 2 zeigt einen Schnitt durch den erfindungsgemäßen Packer;
Fig. 3 zeigt den Packer im aufgeblasenen Zustand im Schnitt;
Fig. 4 zeigt eine Ausführungsform mit abgewandeltem Packer im Schnitt gemäß Figur 3.

Der Packer ist insgesamt mit dem Bezugzeichen 1 versehen. Der Packer besitzt das Tragrohr 2, wobei auf dem Tragrohr 2 ein innerer Mantel 3 angeordnet ist und darüberliegend ein äußerer Mantel 4. Die beiden Mäntel sind endseitig bei 5 und 6 druckdicht, z. B. durch eine Klebung miteinander verbunden. Auf dem äußeren Mantel 4 befindet sich der mit 10 bezeichnete Aufsatz, der mit dem äußeren Mantel 4 verklebt ist.

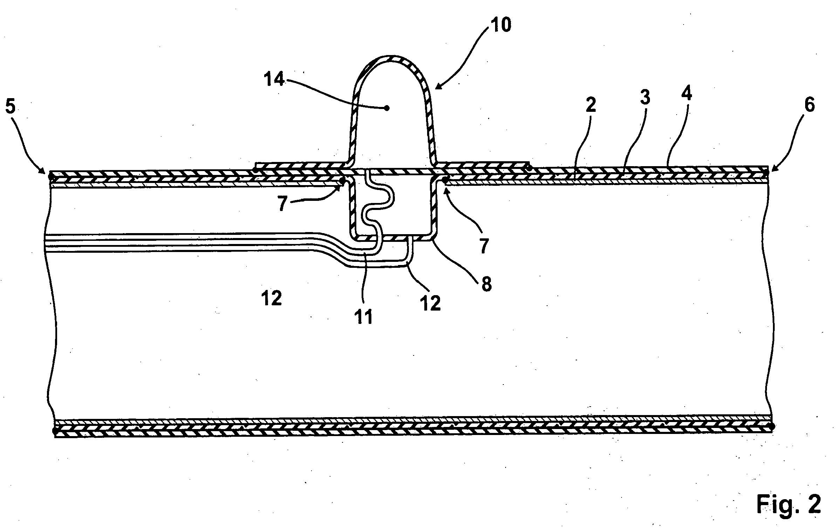

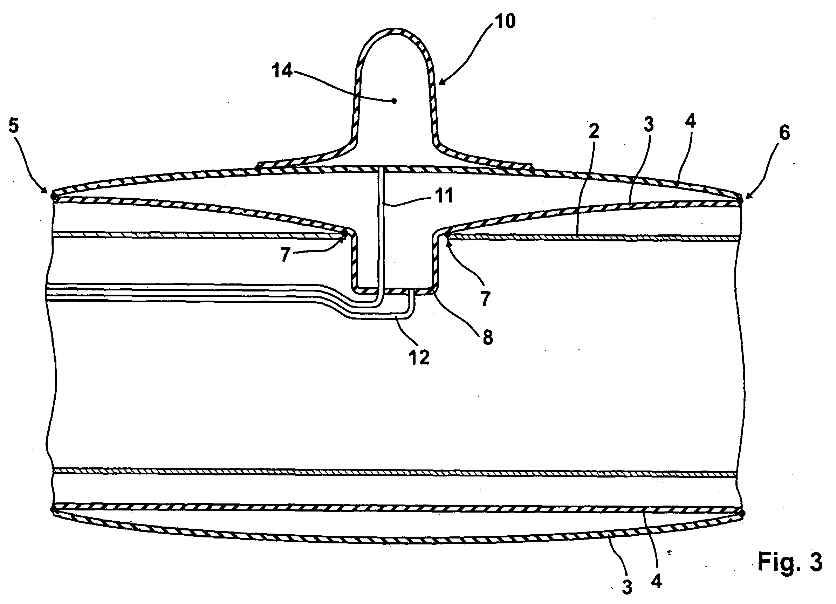

Wie sich insbesondere aus Fig. 2 aber auch aus Fig. 3 ergibt, weist das mit 2 bezeichnete Tragrohr auf dem Umfang eine Öffnung 7 auf, wobei der innere Mantel 3 eine Ausstülpung 8 in Richtung auf die Innenseite des Tragrohres 2 zu aufweist. Die Ausstülpung 8 besitzt zwei Zugänge für Leitungen zum Zuführen von Luft; die erste Leitung 11 liegt mäanderförmig in der Ausstülpung 8 und ragt bis in den Raum 14, der durch den Aufsatz gebildet wird. Das Rohr 12 ragt bis in den Bereich der Ausstülpung 8. Bei Zufuhr von Druckluft als Druckmedium durch den Schlauch 12 in den Raum, der durch die Ausstülpung 8 gebildet wird, werden die beiden Mäntel 3 und 4 eine Ausgestaltung einnehmen, wie sich dies aus Fig. 3 ergibt. Erkennbar ist, dass durch die getroffene Ausgestaltung des Packers ein erheblicher Durchmesserbereich von Abwasserhauptrohren abgedeckt werden kann.

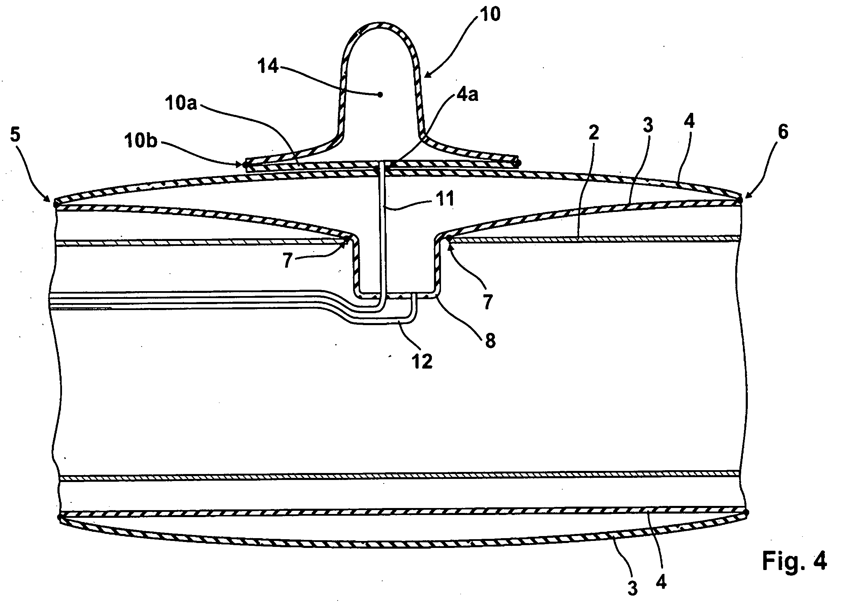

Figur 4 unterscheidet sich von Figur 3 dadurch, dass der Aufsatz 10 einen Boden 10a aufweist, wobei der Boden 10a etwa mittig, insbesondere im Bereich des Durchtritts der Leitung 11 mit dem äußeren Mantel 4 verbunden, insbesondere luftdicht verklebt (Pfeil 9a) ist. Der Vorteil dieser Ausführungsform liegt darin, dass der Aufsatz 10 sich noch besser an den Innendurchmesser des Hausanschlussrohres anpassen kann, als dies bei der Ausführungsform gemäß Figur 2 und Figur 3 der Fall ist. Dies deshalb, weil sich der Aufsatz insofern über seinen Durchmesser vom Mantel 4 abheben kann. Der Aufsatz 10 ist im Übrigen auf dem Boden 10a umlaufend luftdicht verklebt (Pfeil 10b).

## Patentansprüche

1. Packer (1) zum Auskleiden des Übergangsbereiches zwischen einem Abwasserhauptrohr und einem in das Abwasserhauptrohr einmündenden Hausanschlussrohr, umfassend ein Tragrohr (2), wobei das Tragrohr (2) auf dem Umfang mindestens zwei aus elastischem Material hergestellte Mäntel (3, 4) aufweist, die übereinander angeordnet sind, wobei die beiden Mäntel (3, 4) endseitig (5, 6) umlaufend miteinander verbunden sind, wobei der Raum zwischen den beiden Mänteln (3, 4) mit einem Druckmedium, z. B. Luft, beaufschlagbar ist, wobei das Tragrohr (2) eine Öffnung (7) auf dem Umfang aufweist
**dadurch gekennzeichnet,**
**dass** der äußere Mantel (4) einen aus elastischem Material ausgebildeten Aufsatz (10) aufweist, wobei das Tragrohr (2) im Bereich des Aufsatzes (10) die Öffnung (7) aufweist, wobei der Aufsatz (10) auf dem äußeren Mantel (4) mit einem Druckmedium, z. B. Luft, beaufschlagbar ist, wobei der innere Mantel (3) eine in die Öffnung (7) ragende Ausstülpung (8) aufweist.

2. Packer nach Anspruch 1,
**dadurch gekennzeichnet,**
**dass** der Aufsatz (10) hutförmig ausgebildet ist.

3. Packer nach Anspruch 1 oder 2,
**dadurch gekennzeichnet,**
**dass** in die Ausstülpung (8) ein Schlauch (12) oder ein Rohr hineinragt.

4. Packer nach einem der voranstehenden Ansprüche,
**dadurch gekennzeichnet,**
**dass** durch die Ausstülpung (8) hindurch ein Schlauch (11) oder ein Rohr bis in den Aufsatz (10) hineinragt.

5. Packer nach Anspruch 4,
**dadurch gekennzeichnet,**
**dass** der Schlauch (11) oder das Rohr, der in den Aufsatz (10) hineinragt, mäanderförmig in der Ausstülpung (8) einliegt.

6. Packer nach einem der voranstehenden Ansprüche,
**dadurch gekennzeichnet,**
**dass** der Aufsatz (10) einen Boden (10a) aufweist, der etwa zentrisch mit dem äußeren Mantel (4) verbunden ist.

## Claims

1. A packer (1) for cladding the transition between a sewage main pipe and a domestic connection pipe that flows into the sewage main pipe, comprising a support pipe (2), with the support pipe (2) comprising on the circumference at least two jackets (3, 4) made from an elastic material, which are arranged one above the other, with the two jackets (3, 4) on their ends (5, 6) being circumferentially connected with each other, with the space between the two jackets (3, 4) being chargeable with a pressure medium, for example, air, with the support pipe (2) comprising an opening (7) on the circumference
**characterised in**
**that** the outer jacket (4) comprises an attachment (10) formed from an elastic material, with the support pipe (2) comprising the opening (7) in the area of the attachment (10), with the attachment (10) being chargeable with a pressure medium, for example air, on the outer jacket (4), with the inner jacket (3) comprising a protuberance (8) projecting into the opening (7).

2. The packer according to claim 1,
**characterised in**
**that** the attachment (10) is formed in a hat-shaped manner.

3. The packer according to claim 1 or 2,
**characterised in**
**that** a hose (12) or a pipe projects into the protuberance (8).

4. The packer according to any one of the preceding claims,
**characterised in**
**that** through the protuberance (8) a hose (11) or a pipe projects up and into the attachment (10).

5. The packer according to claim 4,
**characterised in**
**that** the hose (11) or the pipe projecting into the attachment (10) is placed in the protuberance (8) in a meander-shaped manner.

6. The packer according to any one of the preceding claims,
**characterised in**
**that** the attachment (10) comprises a bottom (10a) which is connected with the outer jacket (4) approximately centrically.

## Revendications

1. Manchon (1) destiné à l'habillage de la zone de passage entre une conduite principale d'eaux usées et un branchement individuel se jetant dans la conduite principale d'eaux usées, comportant un tube support (2), le tube support (2) comprenant sur la circonférence au moins deux gaines (3, 4) fabriquées d'un matériau élastique qui sont superposées l'une sur l'autre, les deux gaines (3, 4) étant liées entre eux aux extrémités (5, 6) de manière circonférentielle, l'espace entre les deux gaines (3, 4) pouvant être soumise à la pression d'un milieu sous pression, par exemple de l'air, le tube support (2) comprenant une ouverture (7) sur la circonférence
**caractérisé en ce**
**que** la gaine extérieure (4) comprend une rehausse (10) formée d'un matériau élastique, le tube support (2) dans la zone de la rehausse (10) comprenant l'ouverture (7), la rehausse (10) sur la gaine extérieure (4) pouvant être soumise à la pression d'un milieu sous pression, par exemple de l'air, la gaine intérieure (3) comprenant une protubérance (8) faisant saillie dans l'ouverture (7).

2. Manchon selon la revendication 1,
**caractérisé en ce**
**que** la rehausse (10) est en forme de chapeau.

3. Manchon selon la revendication 1 ou 2,
**caractérisé en ce**
**qu'**un tuyau flexible (12) ou un tube fait saillie dans la protubérance (8).

4. Manchon selon l'une quelconque des revendications,
**caractérisé en ce**
**qu'**à travers la protubérance (8) un tuyau flexible (11) ou un tube fait saillie dans la rehausse (10).

5. Manchon selon la revendication 4,
**caractérisé en ce**
le tuyau flexible (11) ou le tube faisant saillie dans la rehausse (10) est placé dans la protubérance (8) en forme de méandres.

6. Manchon selon l'une quelconque des revendications,
**caractérisé en ce**
la rehausse (10) comprend un fond (10a) qui est lié avec la gaine extérieure (4) environ de manière centrée.
